# EUROPEAN PATENT APPLICATION

(11) **EP 4 296 864 A1**
(43) Date of publication of application: **27.12.2023**
(21) Application number: 23178831.6
(22) Date of filing: 13.06.2023
(51) Int. Cl.: G06F 15/02

(54) **ELECTRONIC DEVICE, FUNCTION SETTING SYSTEM, FUNCTION SETTING METHOD, AND PROGRAM**

(30) Priority: 20.06.2022 JP 2022098515
(71) Applicant: Casio Computer Co., Ltd., Tokyo 151-8543 (JP)
(72) Inventor: YANAGISAWA, Masaaki, Tokyo, 205-8555 (JP)
(74) Representative: Plougmann Vingtoft a/s

(57) **Abstract**

A controller (11, 21) of a scientific calculator (1) as an electronic device executes a setting for restricting the use of a plurality of functions on the basis of information regarding availability of each of the plurality of functions included in an advertisement packet received by a communication unit (15), so that a restriction on use of a plurality of functions of the electronic device can be easily set without a user's operation.

## Description

### Technical Field

The present invention relates to an electronic device, a function setting system, a function setting method, and a program.

### Background Art

Conventionally, in an electronic device having a dictionary function, during a period in which a test mode is set, only a dictionary search using only dictionary data used at a time when the test mode is set as a search target can be set available, and a part or all of functions other than the dictionary search can be set unavailable.

### Summary of Invention

### Technical Problem

However, in JP 2014-63316 A, functions that can be used in the test mode and functions that cannot be used are determined in advance. Therefore, it is not possible to define a function that can be used or a function that cannot be used according to a test or an examination.

On the other hand, when a test or an examination is taken, it is not always easy for each user (student) to set a function that can be used or a function that cannot be used in the electronic device according to the test or the examination.

The present invention has been made in view of the above problem, and an object of the present invention is to make it possible to easily set a restriction on use of a function of an electronic device without a user's operation.

### Solution to Problem

In order to solve the above problem, an electronic device of the present invention includes:
a receiver configured to receive a radio signal transmitted from an external device; and
a controller configured to execute any of a plurality of functions, characterized in that
the controller executes a setting for restricting use of the plurality of functions on the basis of information regarding availability of each of the plurality of functions indicated by first data included in a radio signal received by the receiver.

### Advantageous Effects of Invention

According to the present invention, it is possible to easily set a restriction on use of a function of an electronic device without a user's operation.

### Brief Description of Drawings

Fig. 1 is a block diagram illustrating a configuration example of a function setting system.
Fig. 2 is a flowchart illustrating a flow of information processing apparatus-side main processing executed by the information processing apparatus of Fig. 1.
Fig. 3 is a flowchart illustrating a flow of advertisement transmission processing executed in step S6 of Fig. 2.
Fig. 4 is a diagram illustrating an example of a format of an advertisement packet.
Fig. 5 is a flowchart illustrating a flow of scientific calculator-side main processing executed by a scientific calculator of Fig. 1.
Fig. 6 is a flowchart illustrating a flow of advertisement reception processing executed in step S16 of Fig. 5.
Fig. 7 is a flowchart illustrating a flow of advertisement transmission processing A executed by the information processing apparatus of Fig. 1 in a second embodiment.
Fig. 8 is a flowchart illustrating a flow of advertisement reception processing A executed by the scientific calculator of Fig. 1 in the second embodiment.
Figs. 9A and 9B are flowcharts illustrating a flow of scientific calculator-side main processing A executed by the scientific calculator of Fig. 1 in a third embodiment.
Figs. 10A and 10B are flowcharts illustrating a flow of scientific calculator-side main processing B executed by the scientific calculator of Fig. 1 in a fourth embodiment.
Figs. 11A and 11B are flowcharts illustrating a flow of scientific calculator-side main processing C executed by the scientific calculator of Fig. 1 in a fifth embodiment.

### Description of Embodiments

Hereinafter, an embodiment of an electronic device according to the present invention will be described with reference to the drawings. The scope of the invention is not limited to the illustrated example.

### First Embodiment

### [System Configuration]

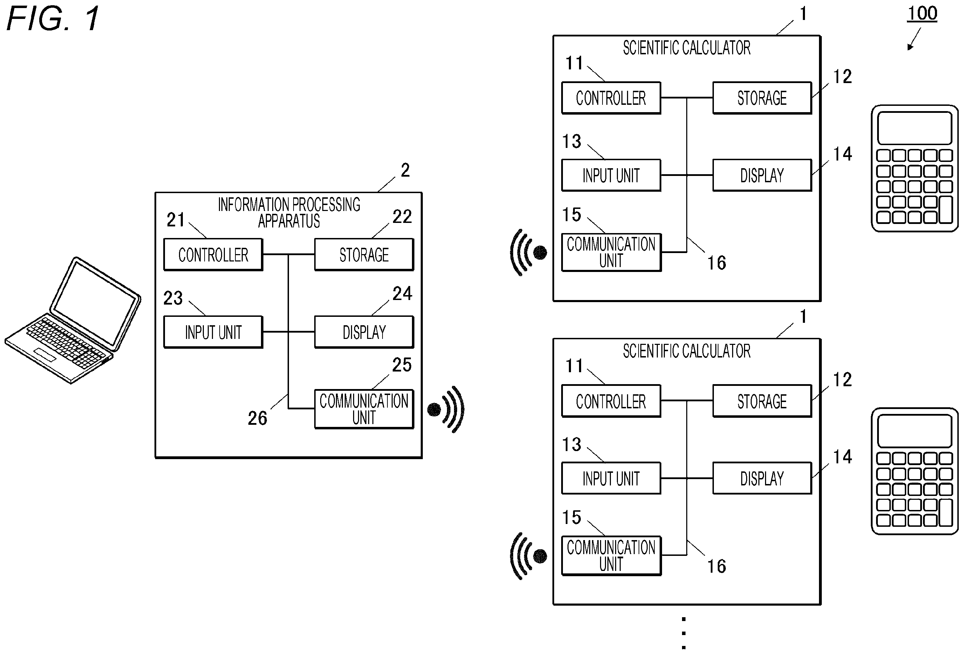

Fig. 1 is a block diagram illustrating a configuration example of a function setting system 100 including a scientific calculator 1 and an information processing apparatus 2 as an example of an electronic device according to the present invention.

The scientific calculator 1 is, for example, a calculator used by a student. The information processing apparatus 2 is, for example, a personal computer (PC), a smartphone, a tablet terminal, a scientific calculator, and the like owned by a teacher. In the function setting system 100, each of the plurality of scientific calculators 1 is set to an examination mode on the basis of a radio signal (advertisement packet) transmitted from the information processing apparatus 2. The examination mode is a mode in which availability of a plurality of functions of the scientific calculator 1 can be set for the examination. Here, the functions of the scientific calculator 1 include, for example, a four arithmetic operation function, a matrix calculation function, a complex number calculation function, a vector calculation function, a statistical calculation function, a function calculation function, a graph/coordinate display function, and a program function (processing function described in a programming language such as Basic configured by definition of a variable, substitution into an expression, condition processing, repetitive processing, and the like). Note that the number of scientific calculators 1 in the function setting system 100 is not particularly limited.

### [Configuration of Scientific Calculator]

As illustrated in Fig. 1, the scientific calculator 1 includes a controller 11, a storage 12, an input unit 13, a display 14, and a communication unit 15, and the respective units are connected via a bus 16.

The controller 11 includes a central processing unit (CPU), a random access memory (RAM), and the like, and controls each unit of the scientific calculator 1. Specifically, the CPU of the controller 11 reads a designated program from the system program and various types of processing programs stored in the storage 12, develops the program in the RAM, and executes various types of processing including a scientific calculator-side main processing to be described later in cooperation with the developed program.

The storage 12 includes a nonvolatile memory or the like, and stores programs, data, and the like.

The storage 12 is not limited to one built in the scientific calculator 1, and may include an external recording medium detachable from the scientific calculator 1.

In the present embodiment, the storage 12 stores a system program of the scientific calculator 1 and a program for executing various types of processing including a scientific calculator-side main processing to be described later.

In addition, the storage 12 stores identification information of a class or a school to which a student who is a user of the scientific calculator 1 belongs as identification information related to the scientific calculator 1. In the present embodiment, the storage 12 stores first identification information that is identification information of a class and second identification information that is identification information of a school as the identification information. The first identification information and the second identification information are, for example, set by a manufacturer before delivering the scientific calculator 1 or set by a teacher before distributing the scientific calculator 1 to a class student. Note that the second identification information is not limited to the identification information of the school, and may be, for example, a lot number of the scientific calculator 1. Regarding the class described here, for example, a plurality of classrooms in a school may be treated as different classes, or in a case where there are three classrooms A to C on the same floor, the classrooms A and B may be treated as the same class, and the classroom C may be treated as a different class. In addition, students existing in one certain classroom A may be divided into two groups, and one group and the other group may be treated as different classes.

In addition, the storage 12 stores a command sequence number (referred to as a processed command sequence number) of a command parameter that has already been processed among command parameters (to be described in detail later) that are first data included in the advertisement packet transmitted from the information processing apparatus 2.

The input unit 13 includes a numeric keypad, a cursor key (cross key), a MENU key, and the like, and outputs a key input signal corresponding to a key input by a user operation to the controller 11. The controller 11 receives the key input signal corresponding to the key input by the user operation and displays a corresponding numerical value, operation symbol, and the like on the display 14, or executes a function selected by key input. In addition, the input unit 13 includes a power button for instructing on/off of the power supply of the scientific calculator 1.

Note that the input unit 13 may include a touch panel.

As described above, the display 14 includes a liquid crystal display or the like, and performs display on the basis of the control operation of the controller 11.

The communication unit 15 performs communication control for performing communication with an external device such as the information processing apparatus 2 by a wireless local area network (LAN) such as WiFi, a mobile phone communication network such as long term evolution (LTE), or Bluetooth (registered trademark).

### [Configuration of Information Processing Apparatus]

As illustrated in Fig. 1, the information processing apparatus 2 includes a controller 21, a storage 22, an input unit 23, a display 24, and a communication unit 25, and the respective units are connected via a bus 26.

The controller 21 includes a central processing unit (CPU), a random access memory (RAM), and the like, and controls each unit of the information processing apparatus 2. Specifically, the CPU of the controller 21 reads a designated program from a system program and various application programs (each referred to as an application) stored in the storage 22, develops the program in the RAM, and executes various types of processing including an information processing apparatus-side main processing to be described later in cooperation with the developed program.

The storage 22 includes a nonvolatile semiconductor memory or a hard disk drive (HDD). The storage 22 stores a system program and various application programs of the information processing apparatus 2, and data necessary for executing the programs. Examples of the program stored in the storage 22 include a processing program for executing the information processing apparatus-side main processing described later and a predetermined application (referred to as an examination mode setting application) for setting the scientific calculator 1 to the examination mode. The storage 22 is not limited to one built in the information processing apparatus 2, and may include an external recording medium such as a memory card detachable from the information processing apparatus 2.

In addition, the storage 22 stores identification information (first identification information and second identification information) corresponding to the class in association with the class.

Furthermore, the storage 22 has a counter area for counting command sequence numbers to be described later.

The input unit 23 includes a pointing device such as a keyboard including various keys or a mouse, a touch panel attached to the display 24, and the like. The input unit 23 outputs the key input signal corresponding to the key input by the user operation and an operation signal on a screen to the controller 21.

The display 24 includes a liquid crystal display or the like, and performs display on the basis of the control operation of the controller 21.

The communication unit 25 performs communication control for performing communication with an external device by a wireless local area network (LAN) such as WiFi, a mobile phone communication network such as long term evolution (LTE), or Bluetooth (registered trademark).

### [Operation]

Next, an operation of the function setting system 100 in the present embodiment will be described.

In the function setting system 100, for example, the scientific calculator 1 of the student is set as the central and the information processing apparatus 2 of the teacher is set as the peripheral. Information (first data) regarding availability of each of a plurality of functions included in the scientific calculator 1 for the examination is included in an advertisement packet of Bluetooth Low Energy (BLE) transmitted from the information processing apparatus 2 and then transmitted, so that the examination mode is set in the scientific calculator 1 of the student.

The advertisement packet is data transmitted by broadcast communication, and the broadcast communication is not one-to-one communication but a one-way communication scheme of simultaneously transmitting the same data to an unspecified number of electronic devices (it is not necessary to establish a one-to-one communication connection).

First, the operation of the information processing apparatus 2 which is the transmission side of the advertisement packet will be described.

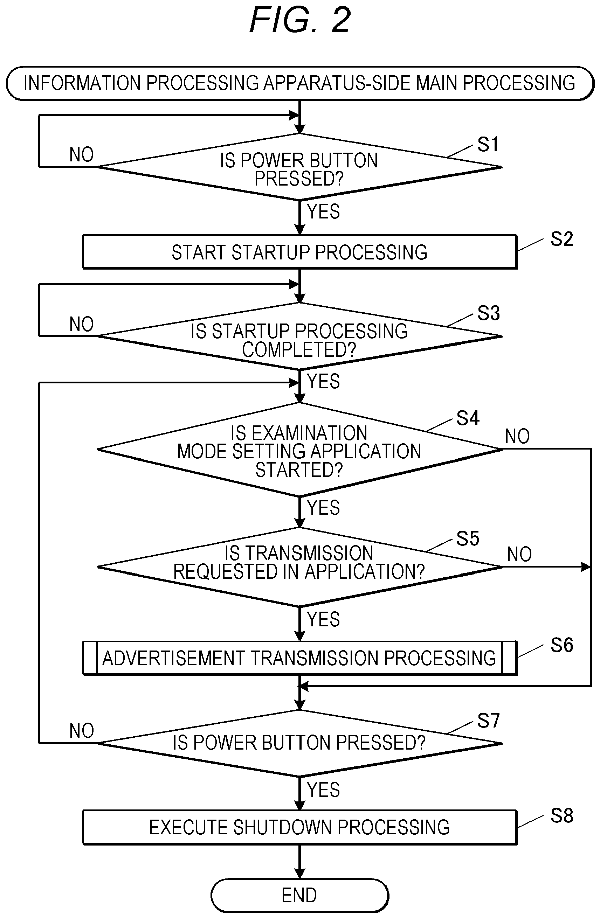

Fig. 2 is a flowchart illustrating a flow of the information processing apparatus-side main processing executed by the information processing apparatus 2. The information processing apparatus-side main processing is executed by cooperation of the controller 21 and a program stored in the storage 22.

When the power button is pressed and the power is turned on (step S1; YES), the controller 21 starts a startup processing (step S2).

Next, the controller 21 determines whether or not the startup processing is completed (step S3). When it is determined that the startup processing is not completed (step S3; NO), the controller 21 repeats the processing of step 3.

When it is determined that the startup processing is completed (step S3; YES), the controller 21 determines whether or not the examination mode setting application is started by the operation of the input unit 23 (step S4).

When it is determined that the examination mode setting application is started (step S4; YES), the controller 21 determines whether or not transmission of an advertisement packet is requested in the examination mode setting application (step S5).

For example, the examination mode setting application can request transmission of an advertisement packet by an operation of the input unit 23.

When it is determined that transmission of the advertisement packet has been requested (step S5; YES), the controller 21 executes an advertisement transmission processing (step S6).

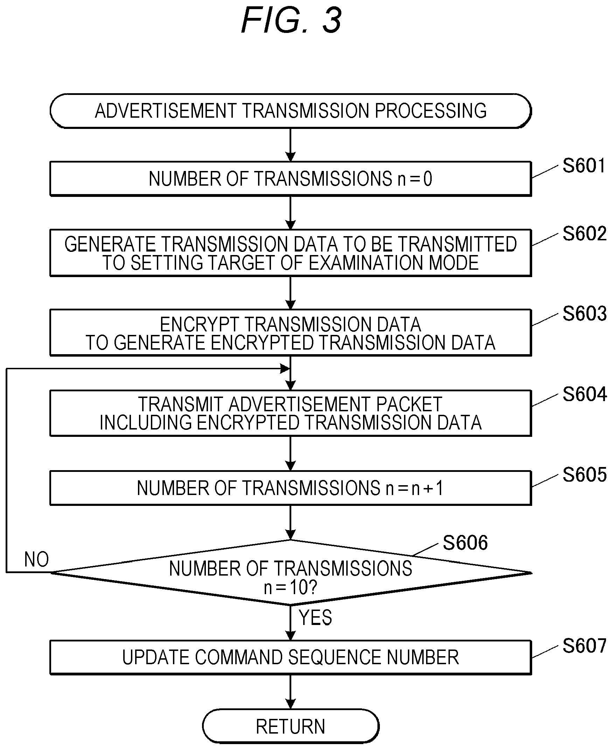

Fig. 3 is a flowchart illustrating a flow of the advertisement transmission processing executed in step S6 of Fig. 2. The advertisement transmission processing of Fig. 3 is executed by cooperation of the controller 21 and the examination mode setting application.

First, the controller 21 sets a variable n (number of transmissions n) for storing the number of transmissions to 0 (step S601).

Next, on the basis of the input from the input unit 23, the controller 21 generates transmission data to be transmitted to the scientific calculator 1 of the user belonging to the class for which the examination mode is to be set (step S602).

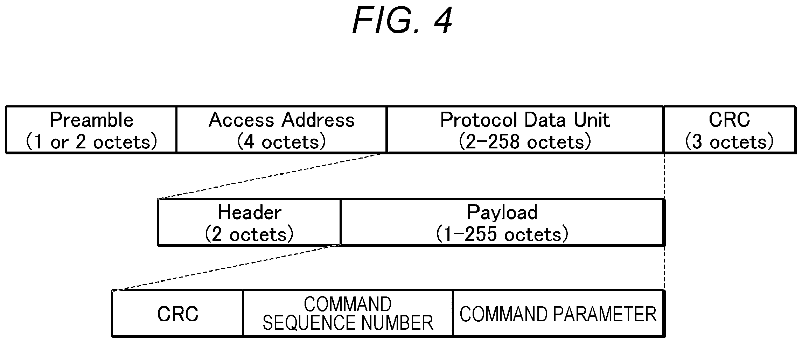

Fig. 4 is a diagram illustrating an example of a format of an advertisement packet transmitted from the information processing apparatus 2. As illustrated in Fig. 4, the advertisement packet includes a preamble, an access address, a protocol data unit (PDU), and a cyclic redundancy check (CRC). The size of each piece of data is indicated by an octet (Octet), and one octet is 8 bits. Further, the PDU includes a header and a payload. In addition, the transmission data in the present embodiment is arranged in a data area of the payload of the PDU, and includes the CRC (which may be a checksum), a command sequence number, and a command parameter.

The command sequence number is a number for identifying transmission data.

The command parameter is information regarding availability of each function of a plurality of functions provided in the scientific calculator 1 in the examination mode. The information regarding the availability of each function of the plurality of functions included in the scientific calculator 1 may be information indicating only the function to be set unavailable in the target examination (i.e., a function not included in the information is available), information indicating only the function to be set available in the target examination (i.e., a function not included in the information is unavailable), or information indicating availability of each function of the plurality of functions.

In the examination mode, functions that should not be used mainly during the examination are set unavailable and use thereof is restricted as a measure against cheating during the examination. Examples of the function of which use is restricted as a measure against the cheating include an add-on application, a programming application, some calculation functions (for example, a vector calculation function in the case of an examination including vector calculation, a statistical function in the case of an examination of statistical calculation, and the like), image file reference, CSV file reference, and taking over of a memory in a calculator across modes such as "normal mode to examination mode" or "examination mode to normal mode".

In step S602, the controller 21 generates the transmission data by, for example, causing the input unit 23 (by the user operation) to select the class to be set in the examination mode and the function to be set unavailable in the examination (alternatively, the function to be set available in the examination), setting the command sequence number stored in the storage 22 to the "command sequence number" of the transmission data, setting the information regarding the availability of each of the plurality of functions of the scientific calculator 1 according to the selection by the input unit 23 to the "command parameter", and setting the command sequence number and the CRC calculated from the command parameter to the "CRC".

Next, the controller 21 acquires the identification information (the first identification information and the second identification information) corresponding to the class selected by the input unit 23 from the storage 22, and encrypts the transmission data by a predetermined encryption scheme using the encryption key generated on the basis of the first identification information and the second identification information to generate encrypted transmission data (step S603).

The encryption scheme is not particularly limited, but for example, Advanced Encryption Standard (AES) or the like can be used.

Next, the controller 21 transmits (broadcasts) the advertisement packet including the encrypted transmission data by the communication unit 25 (step S604).

For example, the controller 21 includes the encrypted transmission data in, for example, the data area of the payload of the PDU of the BLE advertisement packet and transmits the encrypted transmission data.

Next, the controller 21 increments the number of transmissions n by 1 (step S605), and determines whether or not the number of transmissions n is a preset number of times (here, the number is set to 10 including transmission retry) (step S606).

When it is determined that the number of transmissions n is not 10 (step S606; NO), the controller 21 returns to step S604 and repeats steps S604 to S606. Here, since the transmission of the advertisement packet is one-way communication from the information processing apparatus 2 to the scientific calculator 1, the information processing apparatus 2 cannot determine whether or not the central (scientific calculator 1) has successfully received the advertisement packet. Therefore, the controller 21 repeats steps S604 to S606 a preset number of transmissions.

When it is determined that the number of transmissions n is 10 (step S606; YES), the controller 21 increments and updates the count area of the command sequence number stored in the storage 22 (step S607), ends the advertisement transmission processing, and proceeds to step S7 of Fig. 2.

By incrementing and updating the command sequence number stored in the storage 22 in step S607, when another transmission data is included in the advertisement packet and then transmitted, it is possible to identify that the transmission data is new transmission data instead of transmission data by retry at the central (scientific calculator 1).

On the other hand, in a case where it is determined in step S4 of Fig. 2 that the examination mode setting application is not activated (step S4; NO), or when it is determined in step S5 that transmission of the advertisement packet is not requested by the examination mode setting application (step S5; NO), the controller 21 proceeds to step S7.

In step S7, the controller 21 determines whether or not the power button has been pressed (step S7).

When it is determined that the power button has not been pressed (step S7; NO), the controller 21 returns to step S4 and repeatedly executes steps S4 to S7.

When it is determined that the power button has been pressed (step S7; YES), the controller 21 performs shutdown processing (power-off processing) (step S8), and ends the information processing apparatus-side main processing.

Next, the operation of the scientific calculator 1 on the reception side of the advertisement packet will be described.

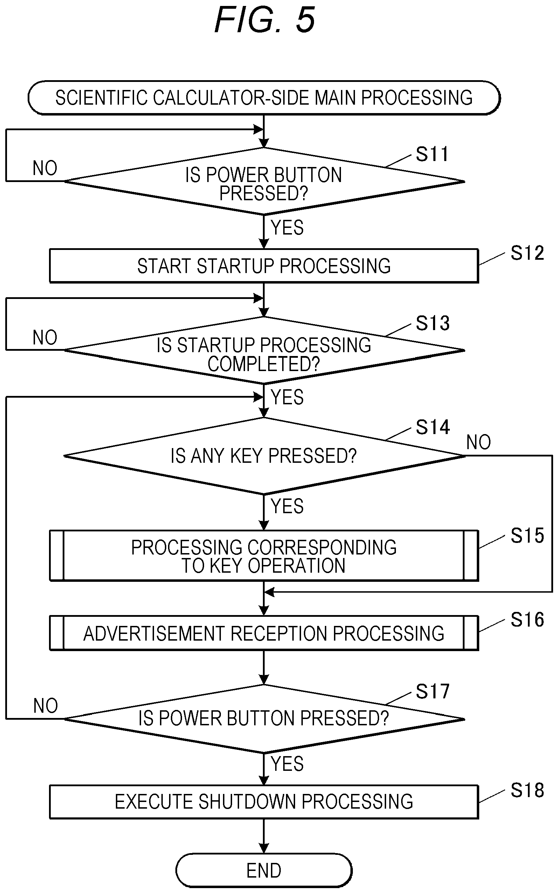

Fig. 5 is a flowchart illustrating a flow of the scientific calculator-side main processing executed in the scientific calculator 1. The scientific calculator-side main processing is executed by cooperation of the controller 11 and the program stored in the storage 12.

When the power button is pressed and the power is turned on (step S11; YES), the controller 11 starts the startup processing (step S12).

Next, the controller 11 determines whether or not the startup processing is completed (step S 13). When it is determined that the startup processing is not completed (step S13; NO), the controller 11 repeats the processing of step S13.

When it is determined that the startup processing has been completed (step S13; YES), the controller 11 determines whether or not any key of the input unit 13 is pressed (step S14).

When it is determined that any key of the input unit 13 has not been pressed (step S14; NO), the controller 11 proceeds to step S16.

When it is determined that any key of the input unit 13 has been pressed (step S14; YES), the controller 11 executes processing (such as displaying a function selected by pressing a key or an input numerical value) corresponding to the pressed key (step S 15), and proceeds to step S16.

Note that the function for which prohibition of use is set is not executed even when the key is pressed.

In step S 16, the controller 11 executes an advertisement reception processing (step S 16).

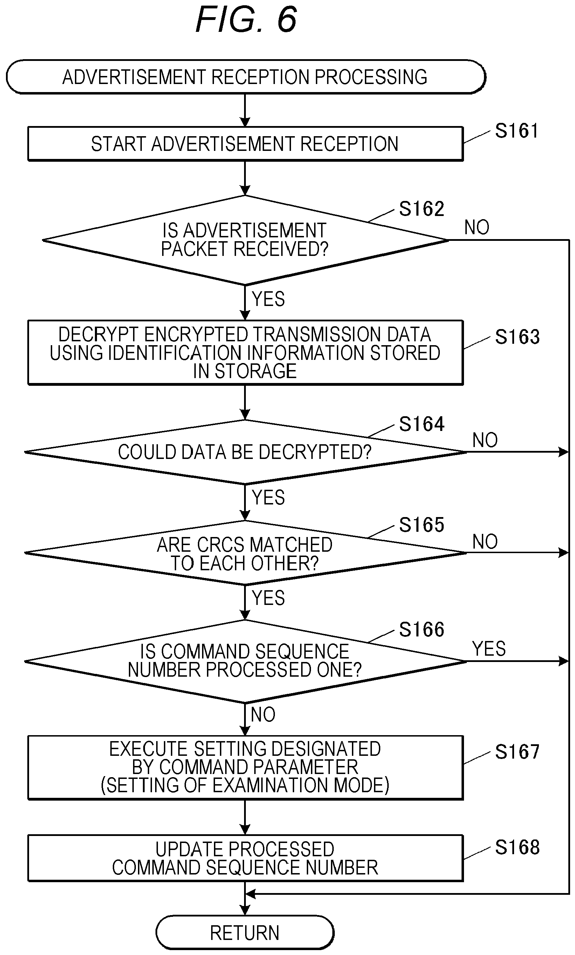

Fig. 6 is a flowchart illustrating a flow of the advertisement reception processing executed in step S16 of Fig. 5. The advertisement reception processing of Fig. 6 is executed by cooperation between the controller 11 and a program stored in the storage 12.

First, the controller 11 scans the advertisement signal and starts reception (step S161).

For example, when the use of Bluetooth is turned off (disabled), the controller 11 turns it on (enabled) and starts searching for surrounding radio waves.

Next, the controller 11 determines whether or not an advertisement packet has been received by the communication unit 15 (step S162).

When it is determined that the advertisement packet has not been received (step S 162; NO), the controller 11 ends the advertisement reception processing and proceeds to step S17 of Fig. 5.

When it is determined that the advertisement packet has been received (step S162; YES), the controller 11 stores the received advertisement packet in the RAM, and decrypts the encrypted transmission data of the received advertisement packet using the identification information (the first identification information and the second identification information) stored in the storage 12 (step S163).

Next, the controller 11 determines whether or not the encrypted transmission data has been decrypted (step S164).

Here, when the identification information (encryption key) used for encryption does not match the identification information (decryption key) used for decryption, the encrypted transmission data cannot be decrypted. For example, in a case where the first identification information used as the encryption key is not the identification information of the class to which the user of the scientific calculator 1 belongs (for example, in a case where encrypted data for a different class is received), the encryption key and the decryption key do not match, so that decryption cannot be performed. That is, it is possible to prevent the examination mode from being set on the basis of transmission data not addressed to the own apparatus.

When it is determined that the encrypted transmission data cannot be decrypted (step S164; NO), the controller 11 discards the advertisement packet temporarily stored in the RAM, ends the advertisement reception processing, and proceeds to step S17 of Fig. 5.

When it is determined that the encrypted transmission data can be decrypted (step S164; YES), the controller 11 determines whether or not the CRC calculated from the decoded transmission data matches the CRC included in the decoded transmission data (step S165).

When it is determined that the CRC calculated from the decoded transmission data does not match the CRC included in the decoded transmission data (step S165; NO), the controller 11 discards the advertisement packet temporarily stored in the RAM, ends the advertisement reception processing, and proceeds to step S17 of Fig. 5.

In a case where the CRCs do not match in step S 165, the examination mode is not set based on the transmission data because the transmission data is falsified or damaged.

When it is determined that the CRC calculated from the decoded transmission data matches the CRC included in the decoded transmission data (step S165; YES), the controller 11 determines whether the command sequence number included in the transmission data is the command sequence number of the already processed transmission data (step S166).

In step S 166, it is determined to prevent the transmission data retried and transmitted by the information processing apparatus 2 from being processed again. The controller 11 compares the processed command sequence number stored in the storage 12 with the command sequence number included in the transmission data, and determines that the command sequence number included in the transmission data is the command sequence number of the already processed transmission data when the command sequence number included in the transmission data is included in the processed command sequence number stored in the storage 12.

When it is determined that the command sequence number included in the transmission data is the command sequence number of the transmission data that has already been processed (step S166; YES), the controller 11 discards the advertisement packet temporarily stored in the RAM, ends the advertisement reception processing, and proceeds to step S17 of Fig. 5.

When it is determined that the command sequence number included in the transmission data is not the command sequence number of the already processed transmission data (step S166; NO), the controller 11 performs setting (setting of the examination mode) designated by the command parameter of the transmission data (step S167).

In step S167, the controller 11 sets a function designated as unavailable in the command parameter of the transmission data to be unavailable (prohibited for use), and sets a function designated as available to be available (permitted for use). The setting information on availability of the function is stored in the RAM of the controller 11. The setting information on availability of the function may be information on only unavailable functions (i.e., functions not included in the setting information are available), information on only available functions (i.e., functions not included in setting information are unavailable), or information indicating availability of all functions.

Next, the controller 11 adds and updates the command sequence number of the transmission data to the processed command sequence number stored in the storage 12 (step S168), ends the advertisement reception processing, and proceeds to step S17 of Fig. 5.

In step S17 of Fig. 5, the controller 11 determines whether or not pressing of the power button has been detected (step S17).

When it is determined that the pressing of the power button has not been detected (step S 17; NO), the controller 11 returns to step S14 and repeatedly executes steps S14 to S17.

When it is determined that the pressing of the power button has been detected (step S17; YES), the controller 11 performs a shutdown processing (step S18), and ends the scientific calculator 1-side main process.

For example, when starting the examination, the teacher of the class using the scientific calculator 1 starts the examination mode setting application in the information processing apparatus 2, and selects the examination target class, the function to be set unavailable (prohibited for use) in the examination, or the function to be set available (permitted for use) in the examination by the input unit 23. In response to the input from the input unit 23, the controller 21 of the information processing apparatus 2 generates transmission data including information regarding availability of a plurality of functions of the scientific calculator 1 in the examination mode as a command parameter, encrypts the generated transmission data with an encryption key including identification information corresponding to a class for taking an examination, includes the encrypted transmission data in an advertisement packet, and transmits the advertisement packet by the communication unit 25.

In the scientific calculator 1, when the advertisement packet transmitted from the information processing apparatus 2 is received by the communication unit 15, the encrypted transmission data included in the advertisement packet is decrypted by the decryption key including the identification information stored in advance in the storage 12, and the function designated as available by the command parameter is permitted for use and the function designated as unavailable is set unavailable (prohibited for use) among the plurality of functions of the scientific calculator 1 based on the command parameter of the decrypted transmission data.

Therefore, it is possible to automatically set the availability in the examination of the plurality of functions owned by the scientific calculator 1 to the examination mode for each examination and for each scientific calculator 1 owned by the plurality of students of the examination target class. As a result, it is possible to easily set the availability in the examination of the plurality of functions of the scientific calculator 1 without the student who is the user individually operating and setting the scientific calculator.

In addition, the scientific calculator 1 is in a state of a function set permitted for use (e.g., a four arithmetic operation function, a matrix calculation function, and the like) and a function set prohibited for use (e.g., a complex number calculation function, a statistical calculation function, and the like) among a plurality of functions of the scientific calculator 1 on the basis of the command parameter. That is, the scientific calculator 1 is in a state in which use of a plurality of functions included in the scientific calculator 1 is restricted.

The setting of the examination mode is canceled by turning off the power supply. In addition, the examination mode may be canceled by the scientific calculator 1 by transmitting an advertisement packet including a command parameter instructing cancellation of the examination mode from the information processing apparatus 2 at the end of the examination.

Note that, in a case where the scientific calculator 1 and the information processing apparatus 2 include a clocking unit (real time clock (RTC)), the encryption key may be obtained by further adding time information acquired from the clocking unit to the first identification information and the second identification information. For example, in the information processing apparatus 2, the command parameters (for example, the CRC and the command sequence number in Fig. 4 may be included) are encrypted using the encryption key generated on the basis of the first identification information, the second identification information, and the time information, and in the scientific calculator 1, the encrypted command parameters are decrypted using the decryption key generated on the basis of the first identification information, the second identification information, and the reception time (range of ± α) of the advertisement packet. As a result, since the encryption key generated from the data to which the time information is added can be used as a one-time password, it is possible to easily prevent hacking such as sending an erroneous signal from the outside. Note that, since there is a possibility that there is a time lag between the time information of the scientific calculator 1 and the time information of the information processing apparatus 2, the time used for the encryption key and the decryption key is preferably set in units with a margin, such as units of several tens of seconds, minutes, and the like.

### Second Embodiment

Hereinafter, a second embodiment of the present invention will be described.

In the first embodiment, at least a part of the transmission data is encrypted and included in the advertisement packet, but in the second embodiment, an example in which the transmission data is transmitted as plain text will be described.

Since the configuration of the function setting system 100 of the second embodiment is similar to that described in the first embodiment, the description thereof is incorporated, and the operation of the second embodiment will be described below.

The information processing apparatus-side main processing performed in the second embodiment is similar to that described with reference to Fig. 2, but the advertisement transmission processing in step S6 is different. In addition, the scientific calculator-side main processing performed in the second embodiment is similar to that described with reference to Fig. 5, but the advertisement reception processing in step S16 is different. Therefore, an advertisement transmission processing and an advertisement reception processing in the second embodiment will be described below.

In the following description, the advertisement transmission processing in the second embodiment will be described as an advertisement transmission processing A, and the advertisement reception processing in the second embodiment will be described as an advertisement reception processing A.

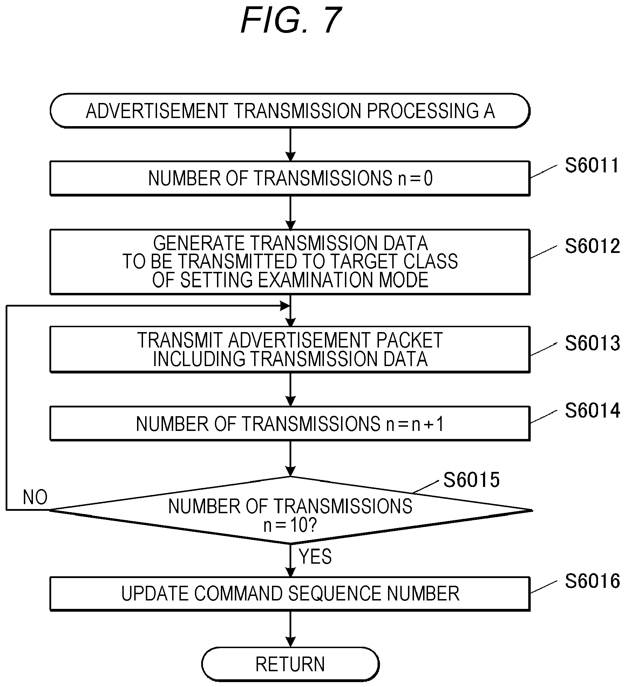

Fig. 7 is a flowchart illustrating a flow of the advertisement transmission processing A. The advertisement transmission processing A is executed by cooperation between the controller 21 of the information processing apparatus 2 and a program stored in the storage 22.

In the advertisement transmission processing A, the controller 21 first sets 0 to a variable n (number of transmissions n) for storing the number of transmissions (step S6011).

Next, on the basis of the input from the input unit 23, the controller 21 generates transmission data to be transmitted to the scientific calculator 1 of the user belonging to the class for which the examination mode is to be set (step S6012).

The transmission data generated in step S6012 includes identification information (second data) in addition to a cyclic redundancy check (CRC, which may be a checksum), a command sequence number, and a command parameter (first data).

The identification information is identification information related to the scientific calculator 1 for which the examination mode is set. In the present embodiment, for example, the identification information is identification information (the first identification information and the second identification information described above) stored in the storage 22 in association with the class selected by the input unit 23.

Next, the controller 21 transmits (broadcasts) the advertisement packet including the generated transmission data by the communication unit 25 (step S6013).

Next, the controller 21 increments the number of transmissions n (step S6014), and determines whether or not the number of transmissions n is a preset number of times (here, 10 is set) (step S6015).

When it is determined that the number of transmissions n is not 10 (step S6015; NO), the controller 21 returns to step S6013, and repeats steps S6013 to S6015.

When it is determined that the number of transmissions n is 10 (step S6015; YES), the controller 21 increments and updates the command sequence number stored in the storage 22 (step S6016), ends the advertisement transmission processing A, and proceeds to step S7 of Fig. 2.

As described above, in the advertisement transmission processing A, the information processing apparatus 2 broadcasts the advertisement packet including the identification information regarding the scientific calculator 1 as a setting target of the examination mode, in addition to the cyclic redundancy check (CRC, which may be a checksum), the command sequence number, and the command parameter.

Next, the advertisement reception processing A will be described.

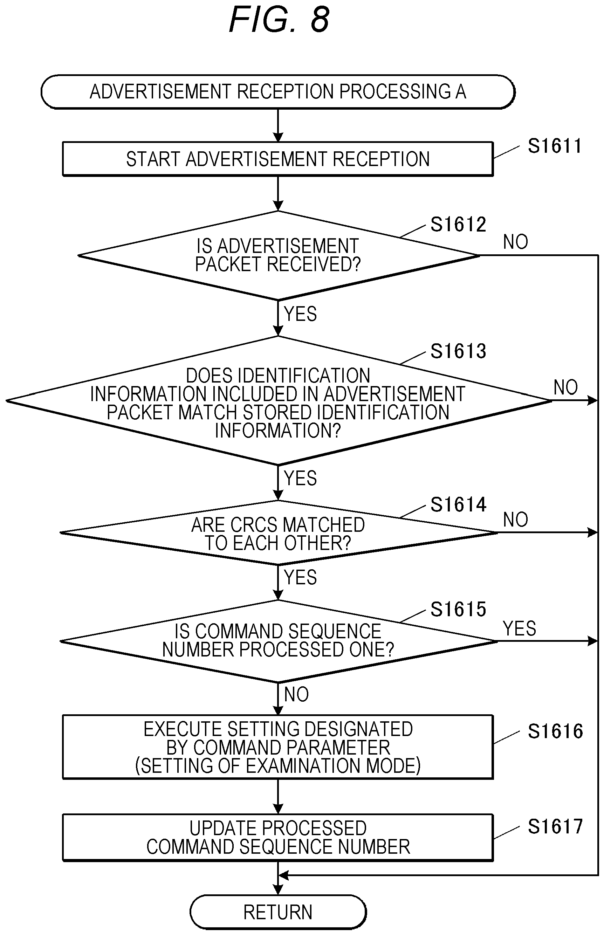

Fig. 8 is a flowchart illustrating a flow of the advertisement reception processing A. The advertisement reception processing A is executed by cooperation between the controller 11 and a program stored in the storage 12 included in the scientific calculator 1.

In the advertisement reception processing A, the controller 11 first scans the advertisement signal and starts reception (step S1611).

Next, the controller 11 determines whether or not an advertisement packet has been received by the communication unit 15 (step S1612).

When it is determined that the advertisement packet has not been received (step S 1612; NO), the controller 11 ends the advertisement reception processing A and proceeds to step S17 of Fig. 5.

When it is determined that the advertisement packet has been received (step S1612; YES), the controller 11 stores the received advertisement packet in the RAM, compares the identification information (second data) included in the transmission data of the advertisement packet with the identification information related to the scientific calculator 1 stored in the storage 12, and determines whether or not the identification information matches (step S1613).

When it is determined that the identification information included in the transmission data of the advertisement packet does not match the identification information related to the scientific calculator 1 stored in the storage 12 (step S1613; NO), the controller 11 discards the advertisement packet temporarily stored in the RAM, ends the advertisement reception processing A, and proceeds to step S17 of Fig. 5.

When it is determined that the identification information included in the transmission data of the advertisement packet matches the identification information related to the scientific calculator 1 stored in the storage 12 (step S1613; YES), the controller 11 determines whether or not the CRC calculated from the transmission data matches the CRC included in the transmission data (step S1614).

When it is determined that the CRC calculated from the transmission data does not match the CRC included in the transmission data (step S1614; NO), the controller 11 discards the advertisement packet temporarily stored in the RAM, ends the advertisement reception processing A, and proceeds to step S17 of Fig. 5.

When it is determined that the CRC calculated from the transmission data matches the CRC included in the transmission data (step S1614; YES), the controller 11 determines whether the command sequence number included in the transmission data is the command sequence number of the already processed transmission data (step S1615).

When it is determined that the command sequence number included in the transmission data is the command sequence number of the transmission data that has already been processed (step S1615; YES), the controller 11 discards the advertisement packet temporarily stored in the RAM, ends the advertisement reception processing A, and proceeds to step S17 of Fig. 5.

When it is determined that the command sequence number included in the transmission data is not the command sequence number of the already processed transmission data (step S1615; NO), the controller 11 performs setting (setting of the examination mode) designated by the command parameter of the transmission data (step S1616).

That is, the controller 11 sets a function designated as unavailable in the command parameter of the transmission data to be unavailable (prohibited for use), and sets a function designated as available to be available (permitted for use). The setting information on availability of the function is stored in the RAM of the controller 11.

Then, the controller 11 updates the processed command sequence number stored in the storage 12 (step S1617), ends the advertisement reception processing A, and proceeds to step S17 of Fig. 5.

As described above, in the advertisement reception processing A, in a case where the identification information included in the transmission data of the advertisement packet matches the identification information related to the scientific calculator 1, setting based on the command parameter (setting of the examination mode) is performed. Therefore, it is possible to avoid setting availability of the function on the basis of the transmission data that is not the transmission data for the own device (scientific calculator 1).

### Third Embodiment

Hereinafter, a third embodiment of the present invention will be described.

In the first embodiment and the second embodiment, when the power supply of the scientific calculator 1 is temporarily turned off and turned on again after the current status has been in the examination mode, the setting of the examination mode is canceled. Therefore, in the third embodiment, a description will be given of control for preventing the setting of the examination mode from being canceled even if the power of the scientific calculator 1 is turned off and turned on again during the examination.

In the third embodiment, the controller 11 of the scientific calculator 1 includes an RTC (clocking unit).

In addition, the storage 12 of the scientific calculator 1 stores a program for executing the scientific calculator-side main processing A to be described later.

Since the other configurations of the function setting system 100 are similar to those described in the first embodiment, the description thereof is incorporated, and the operation of the third embodiment will be described below.

When generating transmission data to be included in an advertisement packet in the above-described advertisement transmission processing (see Fig. 3), the controller 21 of the information processing apparatus 2 generates transmission data further including information (third data) indicating the expiration date of the setting of the examination mode, and transmits the advertisement packet including encrypted transmission data obtained by encrypting the generated transmission data by the communication unit 25.

The information indicating the expiration date of the setting of the examination mode is, for example, an examination end time (for example, 15: 30), an examination time (for example, 60 minutes), and the like.

The controller 11 of the scientific calculator 1 executes the scientific calculator-side main processing A.

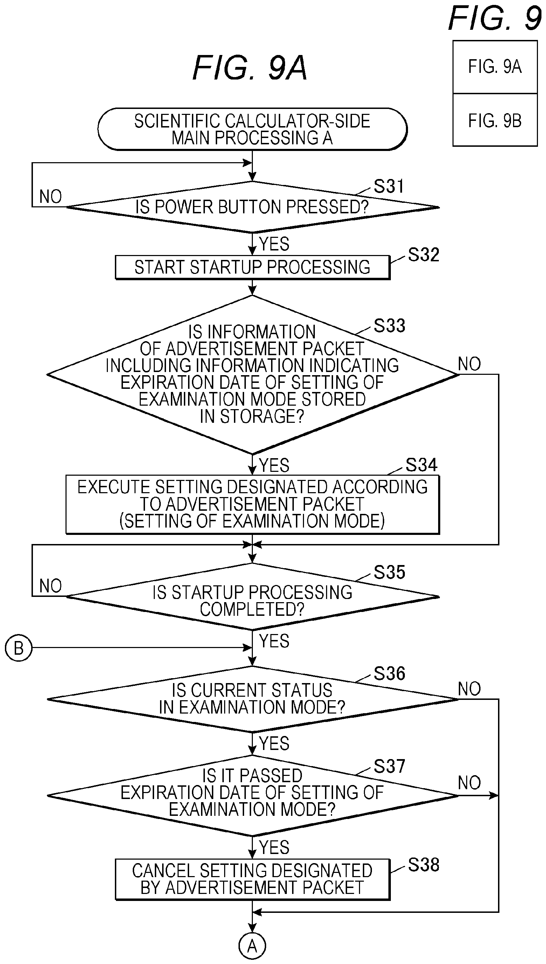

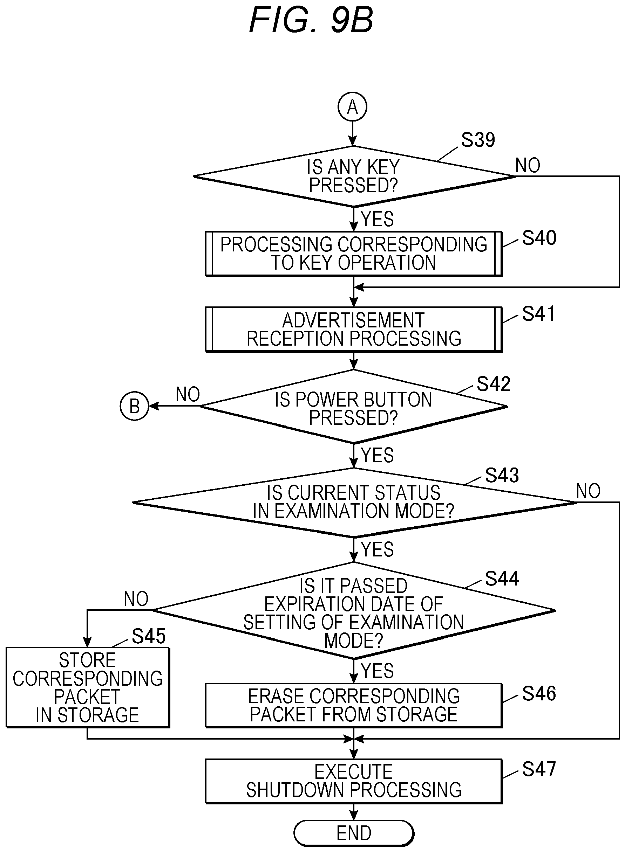

Figs. 9A and 9B are flowcharts illustrating a flow of the scientific calculator-side main processing A. The scientific calculator-side main processing A is executed by cooperation of the controller 11 and the program stored in the storage 12.

When the power button is pressed and the power is turned on (step S31; YES), the controller 11 starts the startup processing (step S32).

Next, the controller 11 determines whether or not the information of the advertisement packet including the information (third data) indicating the expiration date of the setting of the examination mode is stored in the storage 12 (step S33).

Here, in a case where the power is turned off while the examination mode is set, the information of the advertisement packet including the information indicating the expiration date of the setting of the examination mode is stored in the storage 12 by step S45 of the scientific calculator-side main processing A executed before the power is turned off.

When it is determined that the information of the advertisement packet including the expiration date of the setting of the examination mode is stored in the storage 12 (step S33; YES), the controller 21 executes the setting (setting of the examination mode) designated in the information of the advertisement packet (step S34), and proceeds to step S35.

That is, the controller 11 sets availability of the function designated by the command parameter of the data included in the advertisement packet stored in the storage 12. The setting information on availability of the function is stored in the RAM of the controller 11.

When it is determined that the information of the advertisement packet including the information indicating the expiration date of the setting of the examination mode is not stored in the storage 12 (step S33; NO), the controller 11 proceeds to step S35.

In step S35, the controller 11 determines whether or not the startup processing is completed (step S35).

When it is determined that the startup processing is not completed (step S35; NO), the controller 11 repeats step S35.

When it is determined that the startup processing is completed (step S35; YES), the controller 11 determines whether or not the current status is in the examination mode (step S36). That is, it is determined whether or not the examination mode is set.

When it is determined that the current status is not in the examination mode (step S36; NO), the controller 11 proceeds to step S39.

When it is determined that the current status is in the examination mode (step S36; YES), the controller 11 determines whether or not the expiration date of the setting of the examination mode has passed (step S37).

When it is determined that the expiration date of the setting of the examination mode has not passed (step S37; NO), the controller 11 proceeds to step S39.

When it is determined that the expiration date of the setting of the examination mode has passed (step S37; YES), the controller 11 cancels the setting of the examination mode designated by the information of the advertisement packet (step S38), and proceeds to step S39.

Here, in a case where the advertisement packet used for setting the examination mode is stored in the storage 12, the controller 11 also erases the advertisement packet.

In step S39, the controller 11 determines whether or not any key of the input unit 13 has been pressed (step S39).

When it is determined that any key of the input unit 13 has been pressed (step S39; YES), the controller 11 executes processing (such as displaying a function selected by pressing a key or an input numerical value) corresponding to the pressed key (step S40), and proceeds to step S41.

Note that the function for which prohibition of use is set is not executed even when the key is pressed.

When it is determined that any key of the input unit 13 has not been pressed (step S39; NO), the processing proceeds to step S41.

In step S41, the controller 11 executes an advertisement reception processing (step S41).

The processing in step S41 is similar to that described in Fig. 6, but in a case where the information indicating the expiration date of the setting of the examination mode included in the received advertisement packet is the examination time, for example, the examination end time is calculated from the current time and the examination time, and the examination time (information indicating the expiration date) is replaced with the calculated examination end time among the data of the received advertisement packet.

After the advertisement reception processing is ended, the controller 11 determines whether or not pressing of the power button has been detected (step S42).

When it is determined that the pressing of the power button has not been detected (step S42; NO), the controller 11 returns to step S36 and repeatedly executes steps S36 to S42.

When it is determined that the pressing of the power button has been detected (step S42; YES), the controller 11 determines whether or not the current status is in the examination mode (step S43).

When it is determined that the current status is not in the examination mode (step S43; NO), the controller 11 proceeds to step S47.

When it is determined that the current status is in the examination mode (step S43; YES), the controller 11 determines whether or not the time information clocked by the clocking unit has passed the expiration date of the setting of the examination mode has passed (step S44).

When it is determined that the expiration date of the examination mode has not passed (step S44; NO), the advertisement packet used to set the current examination mode is stored in the storage 12 (step S45), and the processing proceeds to step S47.

When it is determined that the expiration date of the examination mode has passed (step S44; YES), the advertisement packet used to set the current examination mode is erased from the storage 12 (step S46), and the processing proceeds to step S47.

Note that, in a case where the power is not turned off during the examination mode, since the corresponding advertisement packet is not stored in the storage 12, step S46 is omitted.

In step S47, the controller 11 performs the shutdown processing and ends the scientific calculator-side main processing A.

As described above, in the scientific calculator-side main processing A, when the pressing of the power button (instruction to turn off the power) is detected, the advertisement packet including the expiration date of the setting of the examination mode is stored in the storage 12 (nonvolatile memory) before the power-off processing is executed, and when the power-on is detected, the advertisement packet is read from the storage 12 to set the function in the examination mode.

Therefore, even if the power supply of the scientific calculator 1 is temporarily turned off after the current status has been in the examination mode, it is possible to prevent the setting of the examination mode from being canceled until the expiration date of the setting of the examination mode has passed.

Note that, as in the second embodiment, the transmission data included in the advertisement packet transmitted from the information processing apparatus 2 may not be encrypted. In this case, the transmission data generated by the information processing apparatus 2 includes identification information (second data) related to the scientific calculator 1 to be set in the examination mode. As the advertisement reception processing in step S41, an advertisement reception processing A illustrated in Fig. 8 is performed.

### Fourth Embodiment

Hereinafter, a fourth embodiment of the present invention will be described.

In the examination, the examination content may change depending on the time zone within the examination time (for example, the first half 30 minutes is a vector examination and the second half 30 minutes is a statistical calculation examination). Therefore, in the fourth embodiment, an example in which the setting of the availability of the plurality of functions of the scientific calculator 1 is changed according to the time zone within the examination time will be described.

In the fourth embodiment, the controller 11 of the scientific calculator 1 includes an RTC (clocking unit).

In addition, the storage 12 of the scientific calculator 1 stores a program for executing the scientific calculator-side main processing B to be described later.

Since the other configurations of the function setting system 100 are similar to those described in the first embodiment, the description thereof is incorporated, and the operation of the fourth embodiment will be described below.

In the information processing apparatus 2 of the present embodiment, it is possible to input (select) availability of a plurality of functions of the scientific calculator 1 for each time zone within the examination time.

When generating the transmission data to be included in the advertisement packet in the advertisement transmission processing described above, the controller 21 of the information processing apparatus 2 generates the transmission data including the information regarding the availability of each of the plurality of functions of the scientific calculator 1 for each time zone within the examination time as the command parameter, and transmits the advertisement packet including the encrypted transmission data obtained by encrypting the generated transmission data by the communication unit 25. The time zone may be indicated by the start time and the end time of the time zone, or may be indicated by a time from the start of the examination, for example, from the start of the examination to XX minutes, or from XX minutes to YY minutes from the start of the examination.

In the scientific calculator 1 of the present embodiment, the controller 11 executes the scientific calculator-side main processing B.

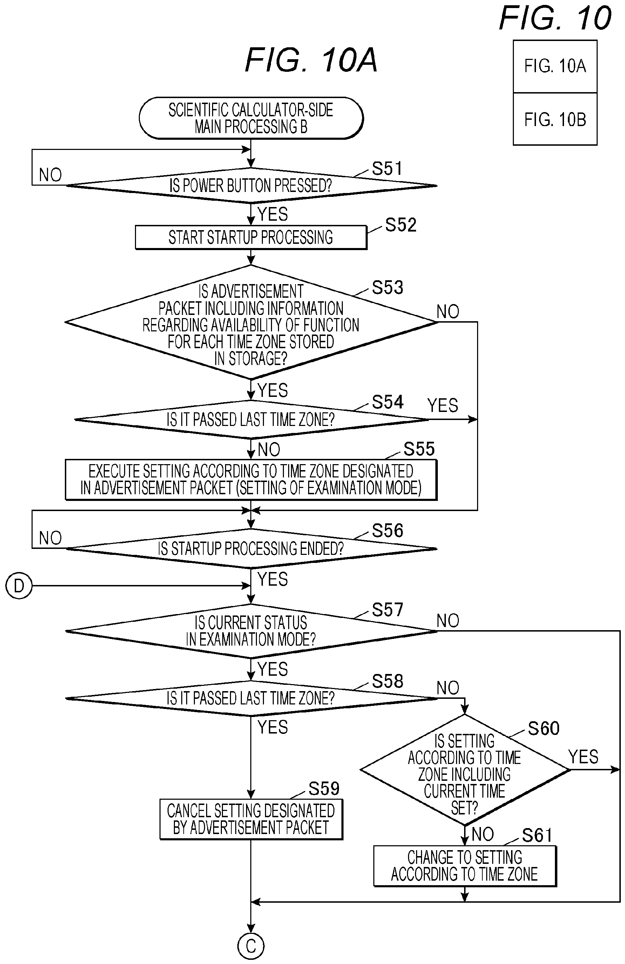

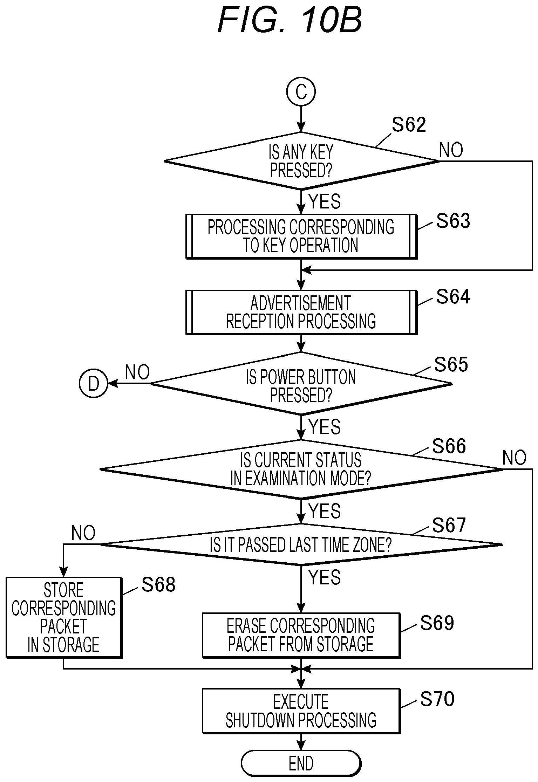

Figs. 10A and 10B are flowcharts illustrating a flow of the scientific calculator-side main processing B. The scientific calculator-side main processing B is executed by cooperation of the controller 11 and the program stored in the storage 12.

When the power button is pressed and the power is turned on (step S51; YES), the controller 11 starts the startup processing (step S52).

Next, the controller 11 determines whether or not information of an advertisement packet including information regarding availability of the function for each time zone within the examination time is stored in the storage 12 (step S53).

Here, in a case where the power is turned off while the examination mode is set, the information of the advertisement packet including the information regarding the availability of the function for each time zone within the examination time is stored in the storage 12 by step S68 of the scientific calculator-side main processing B executed before the power is turned off.

When it is determined that the information of the advertisement packet including the information regarding the availability of the function for each time zone within the examination time is stored in the storage 12 (step S53; YES), the controller 11 determines whether or not the last time zone in the examination time has passed on the basis of the time of the RTC (step S54).

When it is determined that the last time zone has not passed (step S54; NO), the controller 11 executes setting (setting of the examination mode) according to the time zone designated by the advertisement packet (step S55), and proceeds to step S56.

That is, the controller 11 sets availability of the function designated for the time zone including the current time according to the command parameter included in the advertisement packet stored in the storage 12. The setting information on availability of the function is stored in the RAM of the controller 11.

When it is determined that the information of the advertisement packet including the information regarding the availability of the function for each time zone within the examination time is not stored in the storage 12 (step S53; NO), or when it is determined that the last time zone has passed (step S54; YES), the controller 11 proceeds to step S56.

In step S56, the controller 11 determines whether or not the startup processing is completed (step S56).

When it is determined that the startup processing is not completed (step S56; NO), the controller 11 repeats step S56.

When it is determined that the startup processing is completed (step S56; YES), the controller 11 proceeds to step S57.

In step S57, the controller 11 determines whether or not the current status is in the examination mode (step S57). That is, it is determined whether or not the examination mode is set.

When it is determined that the current status is not in the examination mode (step S57; NO), the controller 11 proceeds to step S62.

When it is determined that the current status is in the examination mode (step S57; YES), the controller 11 determines whether or not the last time zone in the examination time has passed based on the time of the RTC (step S58).

When it is determined that the last time zone has passed (step S58; YES), the controller 11 cancels the setting of the examination mode designated by the advertisement packet (step S59), and proceeds to step S62.

Here, in a case where the advertisement packet used for setting the examination mode is stored in the storage 12, the advertisement packet is also erased.

When it is determined that the last time zone has not passed (step S58; NO), the controller 11 determines whether or not the setting according to the time zone including the current time is set (step S60). That is, the controller 11 specifies the current time on the basis of the time of the RTC, and determines whether or not the current examination mode setting is set according to a time zone designated by the command parameter of the advertisement packet and including the current time.

When it is determined that the setting according to the time zone including the current time is set (step S60; YES), the controller 11 proceeds to step S62.

When it is determined that the setting according to the time zone including the current time has not been made (step S60; NO), the controller 11 changes the setting of the availability of the function in the examination mode to the setting according to the time zone including the current time (step S61), and proceeds to step S62.

In step S62, the controller 11 determines whether or not any key of the input unit 13 has been pressed (step S62).

When it is determined that any key of the input unit 13 has been pressed (step S62; YES), the controller 11 executes processing (such as displaying a function selected by pressing a key or an input numerical value) corresponding to the pressed key (step S63), and proceeds to step S64.

Note that the function for which prohibition of use is set is not executed even when the key is pressed.

When it is determined that any key of the input unit 13 has not been pressed (step S62; NO), the processing proceeds to step S64.

In step S64, the controller 11 executes an advertisement reception processing (step S64).

The processing in step S64 is similar to that described with reference to Fig. 6, but in a case where the area indicating the time zone is indicated by time in the received advertisement packet (for example, information regarding availability of each of the plurality of functions of the scientific calculator 1 for XX minutes after the start of the examination and YY minutes after the start of the examination (XX < YY), or the like), for example, the current time is regarded as the start time, the start time and the end time of each time zone are calculated, and the start time and the end time of each time zone in which the time is calculated are replaced with the start time and the end time of each time zone in the data of the received advertisement packet.

Next, the controller 11 determines whether or not the power button has been pressed (step S65).

When it is determined that the power button has not been pressed (step S65; NO), the controller 11 returns to step S57 and repeatedly executes steps S57 to S65.

When it is determined that the power button has been pressed (step S65; YES), the controller 11 determines whether or not the current status is in the examination mode (step S66).

When it is determined that the current status is not in the examination mode (step S66; NO), the controller 11 proceeds to step S70.

When it is determined that the current status is in the examination mode (step S66; YES), the controller 11 determines whether or not the last time zone of the examination time has passed (step S67). When it is determined that the last time zone has not passed (step S67; NO), the controller 11 stores the advertisement packet used to set the current examination mode in the storage 12 (step S68), and proceeds to step S70.

When it is determined that the last time zone has passed (step S67; YES), the advertisement packet used to set the current examination mode is erased from the storage 12 (step S69), and the processing proceeds to step S70.

Note that, in a case where the power is not turned off during the examination mode, since the corresponding advertisement packet is not stored in the storage 12, step S69 is omitted.

In step S70, the controller 11 performs shutdown processing (step S70), and ends the scientific calculator-side main processing B.

As described above, in the scientific calculator-side main processing B, in a case where the information regarding the availability of the function for each time zone of the examination time is included in the data (command parameter) of the advertisement packet, the setting of the availability of the function is changed for each time zone on the basis of the information regarding the availability of the function for each time zone of the examination time. Therefore, the setting of the availability of the function can be changed within the examination time.

Note that, as in the second embodiment, the transmission data included in the advertisement packet transmitted from the information processing apparatus 2 may not be encrypted. In this case, the transmission data generated by the information processing apparatus 2 includes identification information (second data) related to the scientific calculator 1 to be set in the examination mode. As the advertisement reception processing in step S64, an advertisement reception processing A illustrated in Fig. 8 is executed.

### Fifth Embodiment

Hereinafter, a fifth embodiment of the present invention will be described.

In the fifth embodiment, an example will be described in which when a user completes application for an examination from a terminal such as a PC, the PC that has made the application transmits an advertisement packet including transmission data including an examination start time, and when the examination start time arrives, the scientific calculator 1 that has received the advertisement packet automatically sets an examination mode.

In the fifth embodiment, the information processing apparatus 2 is, for example, a PC, a tablet terminal, or a smartphone of a student, and is equipped with a web browser. When the user opens a web application for applying for an examination, the controller 21 displays an application screen on the display 24 in cooperation with the web application. The information input from the application screen includes individual identification information (for example, a model name, a product serial number, a MAC address, and the like) of the scientific calculator 1 used in the examination. When the user inputs necessary items and confirms the application, the controller 21 transmits information input from the application screen to the server of the examination institution by the communication unit 25 in cooperation with the web application to register the information. In addition, the controller 21 executes the advertisement transmission processing (see Fig. 3) in cooperation with the web application, generates an advertisement packet including the command sequence information, the command parameter (first data), the examination start date and time and the examination end date and time (third data, i.e., the start date and time and the end date and time of the setting of the examination mode) in the transmission data, and transmits (broadcasts) the advertisement packet by the communication unit 25.

In the fifth embodiment, the scientific calculator 1 includes an RTC (clocking unit).

In addition, the storage 12 of the scientific calculator 1 stores a program for executing the scientific calculator-side main processing C to be described later. The controller 11 executes the scientific calculator-side main processing C to receive the advertisement packet from the information processing apparatus 2, and when the examination start date and time, that is, the start date and time of the setting of the examination mode arrives, sets the examination mode (sets availability of functions).

Since the other configurations of the function setting system 100 are similar to those described in the first embodiment, the description thereof is incorporated, and the operation of the scientific calculator 1 according to the fifth embodiment will be described below.

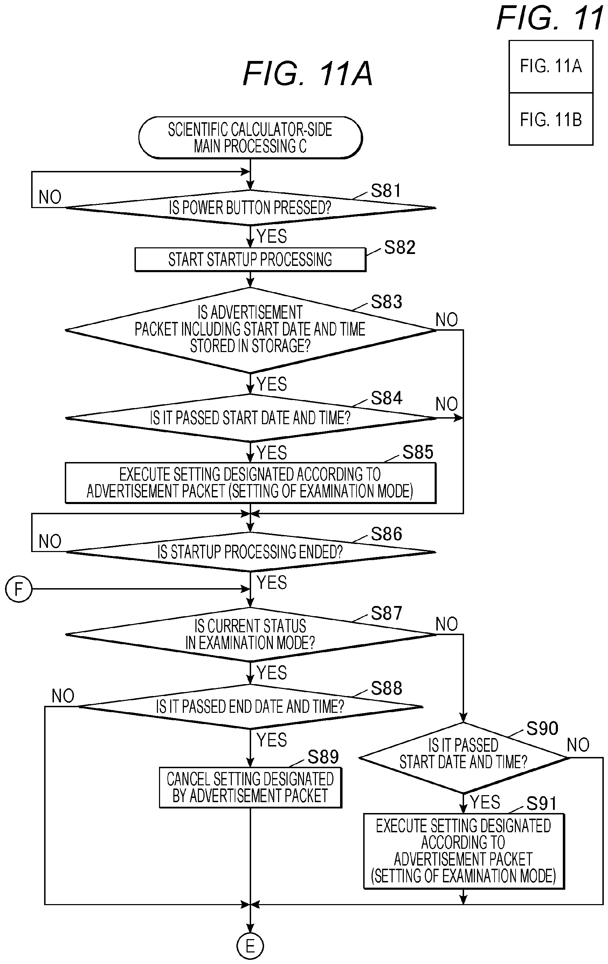

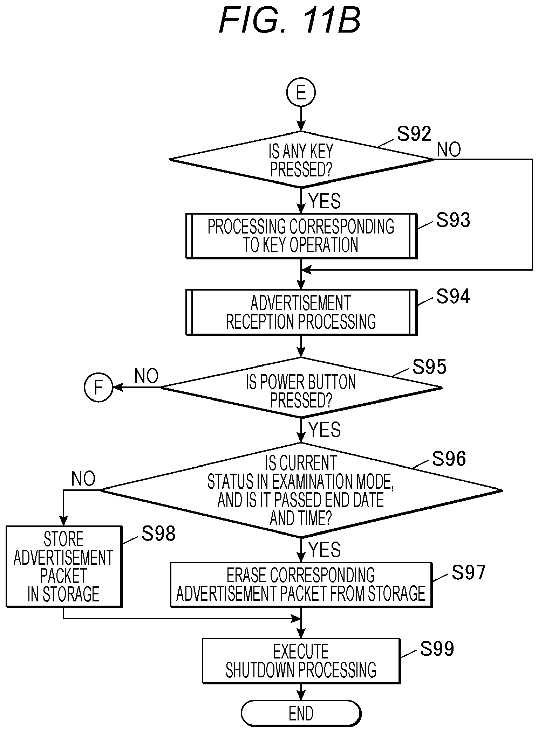

Figs. 11A and 11B are flowcharts illustrating a flow of the scientific calculator-side main processing C. The scientific calculator-side main processing C is executed by cooperation of the controller 11 and the program stored in the storage 12.

When the power button is pressed and the power is turned on (step S81; YES), the controller 11 starts the startup processing (step S82).

Next, the controller 11 determines whether or not the information of the advertisement packet including the information indicating the start date and time and the end date and time of the setting of the examination mode is stored in the storage 12 (step S83).

Here, in a case where the power is turned off after the advertisement packet including the information indicating the start date and time and the end date and time of the setting of the examination mode is received, the information of the advertisement packet including the information indicating the start date and time and the end date and time of the setting of the examination mode is stored in the storage 12 by step S98 of the scientific calculator-side main processing C executed before the power is turned off.

When it is determined that the information of the advertisement packet including the information indicating the start date and time and the end date and time of the setting of the examination mode is stored in the storage 12 (step S83; YES), the controller 11 determines whether or not the date and time indicated by the RTC has passed the start date and time of the setting of the examination mode (step S84).

When it is determined that the date and time indicated by the RTC has passed the start date and time of the setting of the examination mode (step S84; YES), the controller 11 executes setting (setting of the examination mode) designated by the advertisement packet (step S85), and proceeds to step S86.

That is, the controller 11 sets availability of the function designated by the command parameter of the data included in the advertisement packet stored in the storage 12. The setting information on availability of the function is stored in the RAM of the controller 11.

When it is determined that the information of the advertisement packet including the information indicating the start date and time and the end date and time of the setting of the examination mode is not stored in the storage 12 (step S83; NO), or when it is determined that the date and time indicated by the RTC has not passed the start date and time of the setting of the examination mode (step S84; NO), the controller 11 proceeds to step S86.

In step S86, the controller 11 determines whether or not the startup processing is completed (step S86).

When it is determined that the startup processing is not completed (step S86; NO), the controller 11 repeats step S86.

When it is determined that the startup processing is completed (step S86; YES), the controller 11 determines whether or not the current status is in the examination mode (step S87).

Here, in a case where the date and time indicated by the RTC has passed the start date and time of the setting of the examination mode, the controller 11 determines that the current status is in the examination mode.

When it is determined that the current status is in the examination mode (step S87), the controller 11 determines whether or not the date and time indicated by the RTC has passed the end date and time of the setting of the examination mode (step S88).

When it is determined that the date and time indicated by the RTC has passed the end date and time of the setting of the examination mode (step S88; YES), the controller 11 cancels the setting of the examination mode designated by the transmission data of the advertisement packet (step S89), and proceeds to step S92.

Here, in a case where the advertisement packet used for setting the examination mode is stored in the storage 12, the advertisement packet is also erased.

When it is determined that the date and time indicated by the RTC has not passed the end date and time of the setting of the examination mode (step S88; NO), the controller 11 proceeds to step S92.

On the other hand, when it is determined in step S87 that the current status is not in the examination mode (step S87; NO), the controller 11 determines whether or not the date and time indicated by the RTC has passed the start date and time of the setting of the examination mode (step S90).

When it is determined that the date and time indicated by the RTC has not passed the start date and time of the setting of the examination mode (step S90; NO), the controller 11 proceeds to step S92.

When it is determined that the date and time indicated by the RTC has passed the start date and time of the setting of the examination mode (step S90; YES), the controller 11 executes setting (setting of the examination mode) designated by the advertisement packet (step S91), and proceeds to step S92.

That is, the controller 11 sets availability of the function designated by the command parameter of the data included in the advertisement packet stored in the storage 12. The setting information on availability of the function is stored in the RAM of the controller 11.

In step S92, the controller 11 determines whether or not any key of the input unit 13 has been pressed (step S92).

When it is determined that any key of the input unit 13 has been pressed (step S92; YES), the controller 11 executes processing (such as displaying a function selected by pressing a key or an input numerical value) corresponding to the pressed key (step S93), and proceeds to step S94.

Note that the function for which prohibition of use is set is not executed even when the key is pressed.

When it is determined that any key of the input unit 13 has not been pressed (step S92; NO), the processing proceeds to step S94.

In step S94, the controller 11 executes the advertisement reception processing (see Fig. 6) (step S94).

Next, it is determined whether or not pressing of the power button has been detected (step S95). When it is determined that the pressing of the power button has not been detected (step S95; NO), the controller 11 returns to step S87 and repeatedly executes steps S87 to S95.

When it is determined that the pressing of the power button has been detected (step S95; YES), the controller 11 determines whether or not the current status is in the examination mode, and the date and time indicated by the RTC has passed the end date and time of the setting of the examination mode (step S96).

When it is determined that the current status is in the examination mode and the date and time indicated by the RTC has passed the end date and time of the setting of the examination mode (step S96; YES), the controller 11 erases the advertisement packet used to set the current examination mode from the storage 12 (step S97), and proceeds to step S99.

Note that, in a case where the power is not turned off during the examination mode, since the corresponding advertisement packet is not stored in the storage 12, step S97 is omitted.

When it is determined that the current status is not in the examination mode, or when it is determined that the status is in the examination mode but the date and time indicated by the RTC has not passed the end date and time of the setting of the examination mode (step S96; NO), the controller 11 stores the advertisement packet stored in the RAM in the storage 12 (step S98), and proceeds to step S99.

In step S99, the controller 11 performs shutdown processing (step S99), and ends the scientific calculator-side main processing C.

As described above, in the scientific calculator-side main processing C, when the start date and time of the examination mode included in the data of the received advertisement packet arrives, the setting of the availability of the function in the examination mode designated by the command parameter is executed.

Therefore, the advertisement packet can be transmitted to the scientific calculator 1 in advance, not at the start of the examination (immediately before the start of the examination).

Note that the scientific calculator 1 can display a barcode indicating individual identification information (for example, a model name, a product serial number, a MAC address, and the like) of the scientific calculator 1 by pressing a predetermined key of the input unit 13. Therefore, in the examination site, the bar code displayed on the scientific calculator 1 used for the examination may be read to confirm whether or not the scientific calculator used by the examinee is the scientific calculator 1 for which the examination mode is set.

For example, in the examination site, the bar code of the individual identification information is displayed on the scientific calculator 1 of the examinee and read by a PC or a terminal having a bar code reader, and information of the read bar code is transmitted to a server of the examination institution. The server collates the individual identification information of the scientific calculator 1 indicated by the barcode with the individual identification information of the scientific calculator 1 of the examinee of the examination registered in the server, and transmits a confirmation result as to whether or not the individual identification information matches the individual identification information to the PC or the terminal as the transmission source. The PC or the terminal displays the confirmation result received from the server. As a result, it is possible to confirm at the examination site whether or not the function to be used by the examinee is the scientific calculator 1 in which the examination mode is set.

Furthermore, in the present embodiment, the case of applying to an examination institution has been described. However, also in the examination of a school, an advertisement packet having data including information on the start date and time of the examination mode may be transmitted in advance from the information processing apparatus 2 such as a PC of a teacher before the start of the examination, and the examination mode may be automatically set at the examination start date and time.

Furthermore, as in the second embodiment, the data included in the advertisement packet transmitted from the information processing apparatus 2 may not be encrypted. In this case, the transmission data generated by the information processing apparatus 2 includes identification information (second data) related to the scientific calculator 1 to be set in the examination mode. As the advertisement reception processing in step S94, an advertisement reception processing A illustrated in Fig. 8 is performed.

As described above, the controller 11 of the scientific calculator 1 executes the setting for restricting the use of the plurality of functions on the basis of the information regarding the availability of each of the plurality of functions included in the advertisement packet received by the communication unit 15. Specifically, setting of permission or prohibition of use of each of the plurality of functions is executed.

Therefore, it is possible to easily set the restriction on the use of the plurality of functions of the scientific calculator 1 without the user's operation.

Furthermore, for example, in a case where the identification information stored in the storage 12 matches the identification information included in the received advertisement packet, the controller 11 executes the setting based on the received information regarding availability.

Therefore, it is possible to prevent availability of a plurality of functions from being set on the basis of information not intended for the own apparatus.

Furthermore, for example, in a case where the information regarding availability included in the advertisement packet can be decoded on the basis of the identification information stored in the storage 12, the controller 11 executes a setting based on the received information regarding availability.

Therefore, it is possible to prevent availability of a plurality of functions from being set on the basis of information not intended for the own apparatus.

In addition, for example, in a case where an instruction to turn off the power of the scientific calculator 1 is detected after the setting based on the received information regarding availability of the function has been performed, the controller 11 stores the received information regarding availability in the storage 12 and then executes the power off processing.

Therefore, even when the power is turned off and turned on again after the setting of the availability of the function has been performed, the setting of the availability of the function can be performed on the basis of the received information regarding the availability of the function.

Furthermore, for example, in a case where the controller 11 detects an instruction to turn off the power of the scientific calculator 1 after the setting based on the received information regarding availability of the function has been performed, the controller determines whether or not the expiration date of the setting included in the advertisement packet has passed, and in a case where it is determined that the expiration date has not passed, the controller stores the information regarding the availability and the information regarding the expiration date in the storage 12, and then executes the power off processing.

Therefore, even in a case where the power is turned off and the power is turned on again after the setting of the availability of the function has been performed, it is possible to set the availability based on the received information regarding the availability again within the expiration date.

Furthermore, for example, in a case where the power is turned on, the controller 11 reads the information regarding availability stored in the storage 12 and executes the setting again.

Therefore, it is possible to prevent the setting of the availability of the function from being canceled by the operation of the user of once turning off the power and then turning on the power.

Furthermore, for example, the controller 11 determines whether or not the start date and time of the setting included in the advertisement packet has arrived, and executes the setting in a case where it is determined that the start time of the setting has arrived. Therefore, even in the advertisement packet transmitted in advance, the setting can be automatically started at the setting start date and time.

Furthermore, for example, the controller 11 determines whether or not the expiration date of the setting included in the advertisement packet has passed, and cancels the setting in a case where it is determined that the expiration date of the setting has passed. Therefore, it is possible to prevent an inconvenience that a necessary function cannot be used after the expiration date (such as the examination end time) of the setting has passed.

Furthermore, the information regarding availability of the function included in the advertisement packet is information determined for each time zone within a predetermined time range (for example, examination time), and the controller 11 changes the setting for each time zone. Therefore, the available function and the unavailable function can be changed for each time zone.

Note that the description content in the above embodiment is a preferred example of the embodiment of the present invention, and is not limited thereto.

For example, in the above embodiment, the case where the present invention is applied when the availability of the plurality of functions of the scientific calculator 1 is set in the examination has been described as an example, but the present invention is merely an example, and the present invention is not limited thereto. In the above embodiment, the case where the present invention is applied to the scientific calculator 1 has been described as an example, but the present invention is not limited thereto, and the present invention can be applied to a setting of whether or not to use a function in an electronic device having a plurality of functions. That is, the present invention can be widely applied to setting of availability of a function in an electronic device.

Furthermore, in a case where the command parameter is long, the command parameter for one setting may be divided into a plurality of parts and transmitted in a plurality of advertisement packets. In this case, the information processing apparatus 2 assigns a number for specifying the sequential number of the command parameter to the transmission data of the advertisement packet and transmits the transmission data. Information indicating that the data is final data, such as EOF, is added to the final data, and the final data is transmitted. As a result, it is possible to reproduce the command parameter (information on availability of the function) on the electronic device side.

In the above description, an example in which a semiconductor nonvolatile memory or the like is used as a computer-readable medium of the program according to the present invention has been disclosed, but the present invention is not limited to this example. As another computer-readable medium, a portable recording medium such as a CD-ROM can be applied. In addition, a carrier wave is also applied as a medium for providing data of a program according to the present invention via a communication line.

Although the embodiments and modifications of the present invention have been described above, the scope of the present invention is not limited to the above-described embodiments, modifications, and the like, and includes the scope of the invention described in the claims and the scope of equivalents thereof.

Hereinafter, the invention described in the claims initially attached to the application request of this application will be added.

The claim numbers of the appended claims are as defined in the claims originally attached to the application request of this application.

## Claims

1. An electronic device comprising:
a receiver configured to receive a radio signal transmitted from an external device; and
a controller (11, 21) configured to execute any of a plurality of functions, **characterized in that**
the controller (11, 21) executes a setting for restricting use of the plurality of functions on a basis of information regarding a use restriction of each of the plurality of functions indicated by first data included in a radio signal received by the receiver.

2. The electronic device according to claim 1, **characterized in that** the receiver receives the radio signals simultaneously transmitted from the external device to a plurality of electronic devices.

3. The electronic device according to claim 2, **characterized in that** the receiver receives radio signals simultaneously transmitted from the external device to a plurality of electronic devices as radio signals including the same first data.

4. The electronic device according to claim 3, **characterized in that** the first data includes information for individually determining whether or not each of the plurality of electronic devices having received the radio signal executes a setting for restricting use of the function.

5. The electronic device according to claim 4, **characterized in that** the receiver receives radio signals simultaneously transmitted from the external device to the plurality of electronic devices without requiring establishment of a one-to-one communication connection between the external device and each electronic device.

6. The electronic device according to any one of claims 1 to 5, **characterized in that** the controller (11, 21) executes a setting of permission or prohibition of use of each of the plurality of functions on a basis of information indicating availability of each of the plurality of functions indicated by the first data.

7. The electronic device according to any one of claims 1 to 5, further comprising a storage (12, 22) that stores identification information related to the electronic device, **characterized in that**
the controller (11, 21) executes the setting in a case where identification information stored in the storage (12, 22) matches identification information indicated by second data included in the radio signal.

8. The electronic device according to any one of claims 1 to 5, further comprising a storage (12, 22) that stores identification information related to the electronic device, **characterized in that**
the controller (11, 21) executes the setting in a case where the information regarding the availability can be decoded on a basis of the identification information stored in the storage (12, 22).

9. The electronic device according to any one of claims 1 to 5, **characterized in that** in a case where an instruction to turn off the power of the electronic device is detected after execution of the setting based on the information regarding the availability, the controller (11, 21) stores the information regarding the availability in a storage (12, 22) and then executes power off processing.

10. The electronic device according to any one of claims 1 to 5, **characterized in that** the controller (11, 21) determines whether or not an expiration date of the setting indicated by third data included in the radio signal has passed in a case where an instruction to turn off the power of the electronic device is detected after execution of the setting based on the information regarding availability, and executes power-off processing after storing the information regarding availability and the information regarding the expiration date in a storage (12, 22) in a case where the controller (11, 21) determines that the expiration date of the setting has not passed.

11. The electronic device according to claim 9 or 10, **characterized in that** in a case where the electronic device is powered on, the controller (11, 21) reads the information regarding availability from the storage (12, 22) and executes the setting again.

12. The electronic device according to any one of claims 1 to 5, **characterized in that** the controller (11, 21) determines whether or not a start date and time of the setting indicated by fourth data included in the radio signal has arrived, and executes the setting in a case of determining that the start time of the setting has arrived.

13. The electronic device according to any one of claims 1 to 5, **characterized in that** the controller (11, 21) determines whether or not an expiration date of the setting indicated by third data included in the radio signal has passed, and cancels the setting in a case of determining that the expiration date of the setting has passed.

14. The electronic device according to any one of claims 1 to 5, **characterized in that**
the information regarding availability is information determined for each time zone within a predetermined time range, and
the controller (11, 21) changes the setting for each of the time zones.

15. The electronic device according to any one of claims 1 to 5, **characterized in that** the controller (11, 21) executes a setting of an examination mode for restricting use of the plurality of functions on a basis of information indicating a function permitted for use in an examination and a function not permitted for use in an examination indicated by the first data.

16. A function setting system (100) comprising an information processing apparatus (2) and a plurality of electronic devices, **characterized in that**
the information processing apparatus (2) simultaneously transmits radio signals including information regarding availability of each of a plurality of functions included in an electronic device to the plurality of electronic devices,
each of the plurality of electronic devices includes:
a receiver configured to receive the radio signals simultaneously transmitted from the information processing apparatus (2) to the plurality of electronic devices; and
a controller (11, 21) configured to execute any of a plurality of functions, and
the controller (11, 21) executes a setting for restricting use of a plurality of the functions on a basis of information regarding a use restriction of each of the plurality of functions indicated by first data included in the radio signal received by the receiver.

17. The electronic device according to claim 16, **characterized in that**
the information processing apparatus (2) is used by a teacher in a case where an examination is performed,
the plurality of electronic devices are used by a plurality of students who are to take the examination, and
each of the plurality of electronic devices executes a setting of an examination mode for restricting use of each of the plurality of functions on a basis of information indicating a function permitted for use in an examination and a function not permitted for use in an examination indicated by the first data.

18. A function setting method comprising:
receiving a radio signal transmitted from an external device;
performing any of a plurality of functions; and
executing a setting for restricting use of a plurality of the functions on a basis of information regarding a use restriction of each of the plurality of functions indicated by first data included in the received radio signal.

19. A program configured to cause a computer to function as:
a receiver configured to receive a radio signal transmitted from an external device; and
a controller (11, 21) configured to execute any of a plurality of functions, **characterized in that**
the controller (11, 21) executes a setting for restricting use of a plurality of the functions on a basis of information regarding a use restriction of each of the plurality of functions indicated by first data included in a radio signal received by the receiver.
